# EUROPÄISCHE PATENTSCHRIFT

(11) **EP 1 761 327 B1**
(45) Veröffentlichungstag und Bekanntmachung des Hinweises auf die Patenterteilung: **20.05.2015**
(21) Anmeldenummer: 05762743.2
(22) Anmeldetag: 16.06.2005
(51) Int. Cl.: B01D 63/02, B01D 65/08

(54) **MEMBRANMODUL FÜR EINEN TAUCHBETRIEB**
MEMBRANE MODULE FOR IMMERSED OPERATION
MODULE A MEMBRANE POUR TRAVAIL EN PLONGEE

(30) Priorität: 17.06.2004 DE 102004029141
(43) Veröffentlichungstag der Anmeldung: 14.03.2007
(73) Patentinhaber: Koch Membrane Systems GmbH, 52072 Aachen (DE)
(72) Erfinder: SCHÄFER, Stefan, 52074 Aachen (DE); VOSSENKAUL, Klaus, 52074 Aachen (DE); KULLMANN, Christoph, 52249 Eschweiler (DE)
(74) Vertreter: Albrecht, Rainer Harald
(86) Internationale Anmeldenummer: PCT/EP2005/006448
(87) Internationale Veröffentlichungsnummer: WO 2005/123231

(56) Entgegenhaltungen:
- EP-A- 0 855 212
- WO-A-00/18498
- WO-A-2004/101120
- KR-A- 2002 039 383
- US-A- 4 876 006
- US-A1- 2004 035 779
- PATENT ABSTRACTS OF JAPAN Bd. 1995, Nr. 10, 30. November 1995 (1995-11-30) & JP 07 185268 A (TORAY IND INC), 25. Juli 1995 (1995-07-25) in der Anmeldung erwähnt

## Beschreibung

Die Erfindung betrifft Membranmodul für einen Tauchbetrieb mit
einem Faserbündel aus einer Vielzahl von Hohlfasermembranen, die mit einem offenen Ende in ein Kopfstück eingegossen sind und im Tauchbetrieb von einer zu filtrierenden Flüssigkeit umgeben werden,
einem an das Kopfstück anschließenden Permeatsammelraum mit mindestens einem Permeatauslass für das aus dem Inneren der Hohlfasermembranen abfließende Permeat und
einer Gaszuführung, die ein durch das Kopfstück geführtes Rohr aufweist,
wobei das Rohr im Inneren des Faserbündels in einem Gasauslass für ein gasförmiges Medium endet, welches nach dem Übergang aus dem Rohr in die zu filtrierende Flüssigkeit im Wesentlichen zwischen den Hohlfasermembranen des Faserbündels als Blasen aufsteigt.

Hohlfasermembranen bezeichnet dünne, kapillarförmige Membranen, die zumeist eine Länge von mehr als einem Meter sowie einen Durchmesser im Bereich zwischen 100 µm und 5 mm aufweisen. Das Membranmodul wird für einen Tauchbetrieb in ein Becken mit einer zu filtrierenden Flüssigkeit abgesenkt, wobei die Hohlfasermembranen in der Flüssigkeit im Wesentlichen vertikal ausgerichtet sind. Bei einem im Tauchbetrieb arbeitenden Membranmodul wird das Permeat aus dem Permeatsammelraum abgepumpt. Hierdurch wird im Permeatsammelraum ein Druck aufrechterhalten, der kleiner ist als der Flüssigkeitsdruck an der Außenseite der Hohlfasermembranen.

Ein Membranmodul mit den eingangs beschriebenen Merkmalen ist aus US 2004/0035779 A1 bekannt. Die Hohlfasermembranen sind mit einem Ende in das Kopfstück eingegossen und an ihrem anderen Ende einzeln verschlossen. Der Permeatsammelraum mit Kopfstück und Gaszuführung bildet ein Fußteil, das an einem Gestell montierbar ist und für einen Tauchbetrieb in ein Becken mit der zu filtrierenden Flüssigkeit abgesenkt wird. Die Hohlfasermembranen stehen ähnlich wie Seegras in der zu filtrierenden Flüssigkeit und können relativ zueinander Bewegungen ausführen. Lediglich übermäßige Bewegungen des Faserbündels werden durch seitliche Faserhalterungen eingeschränkt. Beim Betrieb des Membranmoduls sammelt sich Schmutz an der Membranoberfläche der Hohlfasermembranen an. Durch eine Begasung mit Luft, die durch das Rohr der Gaszuführung in das Innere des Faserbündels eingeleitet wird, werden die zu filtrierende Flüssigkeit sowie die Hohlfasermembranen in Bewegung versetzt und kann der an den Hohlfasermembranen zurückgehaltene Schmutz abtransportiert werden. Die bekannten Maßnahmen reichen allerdings nicht aus, um im Fußbereich des Faserbündels auf Dauer eine Verschlammung zu vermeiden. Der Fußbereich ist ein an das Kopfstück anschließender Abschnitt des Faserbündels, in dem die Hohlfasermembranen aufgrund ihrer endseitigen Einspannung nur begrenzt beweglich sind. Die im Fußbereich einsetzende Verschlammung des Membranmoduls setzt sich nach oben fort und hat auf Dauer zur Folge, dass ein mehr oder weniger großer Teil des Faserbündels vollkommen verschlammt und auch durch eine intensive Begasung nicht mehr freigespült werden kann. Die Begasungsluft streicht an den zunehmend verschlammenden Zonen des Faserbündels vorbei, was zur Folge hat, dass die Verschlammung des Faserbündels rasch fortschreitet. Eine Verschlammung des Faserbündels setzt umso eher ein, je größer der Permeatfluss und damit die lokale Entwässerung des Schlammes ist.

Aus WO 97/06 880 ist ein Membranmodul für einen Tauchbetrieb bekannt, dessen Faserbündel aus Hohlfasermembranen zwischen zwei Kopfstücken eingespannt ist. Die mit Hohlfasermembranen belegten Stirnflächen der beiden Kopfstücke sind in Sektionen unterteilt, wobei zwischen den Sektionen Freiräume verbleiben. Die Freiräume werden für die Anordnung eines Gasverteilers benutzt, der sternförmig an ein Rohr anschließende Kanäle mit Gasaustrittsöffnungen aufweist. Die Luft strömt im Wesentlichen in den Freiräumen des Faserbündels auf und soll hier eine Verwirbelung der zu filtrierenden Flüssigkeit bewirken. Eine ähnliche Anordnung ist in JP-A 07/185 268 für einen Membranmodul beschrieben, der nicht im Tauchbetrieb, sondern in ein flüssigkeitsdurchströmtes Mantelrohr eingesetzt wird. Auch bei den aus WO 97/06 880 und JP-A 07/185 268 bekannten Anordnungen ist auf Dauer eine Verschlammung des Faserbündels nicht vermeidbar.

Aus EP 0 855 212 A1 ist ein Membranmodul mit einem flüssigkeitsdruchströmten Filterraum bekannt. An den Modulenden sind Kopfstücke vorgesehen, die durch einen sternförmigen Einsatz verstärkt sind. Der Sternförmige Einsatz kammert das Eingießmaterial für die Hohlfasermembranen. Eine Vorrichtung zur Begasung des Filterraumes ist nicht vorgesehen.

Die US 4 876 006 zeigt eine Filteranordnung mit einem Faserbündel aus Hohlfasermembranen. Dabei ist das Faserbündel an der Außenseite und an der Innenseite am Übergang zu dem zu filtrierenden Medium von eine korbartigen Schutzzylinder eingefasst.

Der Erfindung liegt die Aufgabe zugrunde, einen für einen Tauchbetrieb geeigneten Membranmodul anzugeben, der eine geringe Tendenz zur Verschlammung aufweist. Auch bei einer großen Schmutzfracht sowie einer großen Permeabilität der Hohlfasermembranen soll eine im Fußbereich des Faserbündels beginnende Verschlammung unterbunden werden.

Die Aufgabe wird bei einem Membranmodul mit den eingangs beschriebenen Merkmalen erfindungsgemäß dadurch gelöst, das Membranmodul nach Anspruch 1.

Das Faserbündel ist in Sektionen unterteilt ist, die jeweils eine Gruppe von Hohlfasermembranen umfassen, wobei zwischen den Sektionen Freiräume verbleiben, die sich von dem Rohr bis zum äußeren Umfang des Kopfstückes erstrecken und einen Zufluss der zu filtrierenden Flüssigkeit in einen an das Kopfstück angrenzenden Fußbereich des Faserbündels fördern. Das gasförmige Medium, zumeist Luft, wird im Inneren des Faserbündels zugeführt und erzeugt dort durch aufsteigende Gasblasen eine Strömungsbewegung. Durch die erfindungsgemäßen Freiräume im Fußbereich des Faserbündels kann Flüssigkeit aus der Umgebung des Faserbündels nachströmen. Diese Strömung wirkt sich in den Sektionen auf den Bereich zwischen den Hohlfasermembranen aus und verhindert, dass dort eine Verschlammung einsetzen kann. Ablagerungen können rechtzeitig und wirksam abtransportiert werden. Das Zusammenwirken einer zentralen Gaszuführung im Inneren des Faserbündels in Verbindung mit Freiräumen innerhalb des Faserbündels, die sich stern- bzw. strahlenförmig von dem Rohr bis zum äußeren Umfang des Kopfstückes erstrecken, verhindert auf überraschend wirksame Weise eine im Fußbereich einsetzende Verschlammung des Faserbündels. Das Kopfstück kann als zylindrische Hülse ausgebildet werden, wobei das Rohr der Gaszuführung zweckmäßig in der Zylinderachse angeordnet ist.

Das Kopfstück kann einen das Rohr umgebenden sternförmigen Einsatz aufweisen, der eine mit Hohlfasermembranen belegte Stirnfläche des Kopfstückes in die Sektionen unterteilt und die Freiräume zwischen den Sektionen bildet. Der sternförmige Einsatz wird mit den Hohlfasermembranen in das Kopfstück eingegossen und ist danach ganz oder teilweise von Gießmaterial umgeben. Er weist radiale oder spiralförmig gekrümmte Stege auf, die sich von dem Rohr oder von einer das Rohr umgebenden Nabe bis zum Umfang des Kopfstückes erstrecken. Diese sind zweckmäßig oberseitig gerundet oder mit Abschrägungen versehen.

Zur Herstellung des Membranmoduls wird das Faserbündel in das Kopfstück eingesetzt und der Freiraum zwischen dem Kopfstück und den Hohlfasermembranen mit einem Gießharz vergossen. Das Einbringen der Faserenden der Hohlfasermembranen in das Kopfstück kann durch eine zweckmäßige Gestaltung des Einsatzes erleichtert werden. Eine in dieser Hinsicht zweckmäßige Ausgestaltung sieht vor, dass der Einsatz eine von innen nach außen abnehmende Höhe aufweist, wobei der an das Rohr angrenzende Kern des Einsatzes den Mantel des Kopfstückes an der Stirnseite überragt und wobei das mantelseitige Anschlussende des Einsatzes in dem von dem Mantel des Kopfstückes umschlossenen Raum versenkt angeordnet ist, so dass der Mantel des Kopfstückes eine oberseitig vorstehende Einfassung bildet. Beim Einführen der zu einem Bündel zusammengefassten Hohlfasermembranen in das Kopfstück werden die auf den Einsatz auftreffenden Faserenden nach außen hin umgelenkt, wobei die benachbarten Fasern in Richtung auf die mantelseitige Einfassung verdrängt werden und damit das Bündel verdichtet wird. Man erhält auf diese Weise Sektionen mit dicht gedrängt angeordneten und gleichmäßig auf die Sektionen verteilten Hohlfasermembranen. Zweckmäßig weist die Einfassung eine sich nach oben konisch erweiternde Innenfläche auf.

Der sternförmige Einsatz kann eine Öffnung für die Zuführung von Gießmaterial enthalten, welches sich unterhalb des Einsatzes verteilt und die Hohlfasermembranen dicht umschließt. Der sternförmige Einsatz ist zweckmäßig ein Kunststoffformteil aus einem Kunststoff, an dem das Gießmaterial gut haftet. Der sternförmige Einsatz und das zum Eingießen der Hohlfasermembranen verwendete Gießmaterial können auch aus demselben Material bestehen.

Der Gasauslass des Rohres ist mit geringem Abstand vom Kopfstück im Fußbereich des Faserbündels angeordnet. Das Rohr weist im Rahmen der erfindungsgemäßen Lehre eine als Düse ausgebildete axiale Auslassöffnung auf, die beispielsweise in Form einer Venturidüse ausgebildet ist. Ein mit hoher Geschwindigkeit austretender Luftstrom hat einen beachtlichen Saugeffekt auf die umgebende Flüssigkeit.

Die Hohlfasermembranen sind vorzugsweise an ihrem von dem Kopfstück abgewandten Ende einzeln verschlossen, wobei das verschlossene Ende der Hohlfasermembranen in der Flüssigkeit frei beweglich ist. Im Rahmen der Erfindung soll es aber auch liegen, dass das Faserbündel zwischen zwei Kopfstücken eingespannt ist, wobei sich an beiden Kopfstücken ein Permeatsammelraum anschließen kann.

Im Folgenden wird die Erfindung anhand einer lediglich ein Ausführungsbeispiel darstellenden Zeichnung erläutert. Es zeigen schematisch
- Fig. 1: einen Längsschnitt durch einen Membranmodul mit einer nicht von der Erfindung umfassten Ausgestaltung eines Gasauslasses,
- Fig. 2: einen Längsschnitt durch ein Kopfstück des in Fig. 1 dargestellten Membranmoduls,
- Fig. 3: den Schnitt I-I aus Fig. 2,
- Fig. 4: eine weitere Ausgestaltung des Kopfstückes in der Draufsicht,
- Fig. 5: einen Längsschnitt durch das in Fig. 4 dargestellte Kopfstück, und zwar beim Einbringen von Gießmaterial im Zuge der Fertigung des Kopfstückes mit einer nicht von der Erfindung umfassten Ausgestaltung eines Gasauslasses,
- Fig. 6: ein weiteres Ausführungsbeispiel des Kopfstückes im Längsschnitt,

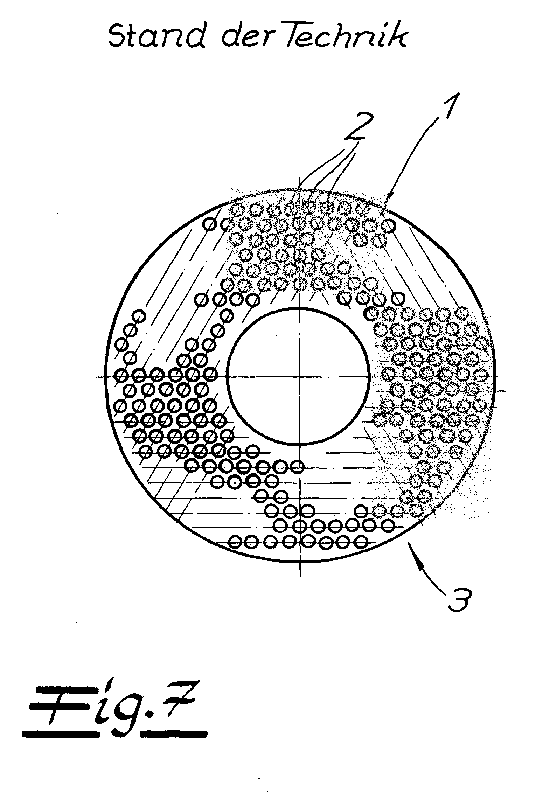

- Fig. 7: einen Membranmodul gemäß dem Stand der Technik in einer der Fig. 3 entsprechenden Darstellung, und

Der in den Figuren dargestellte Membranmodul ist für einen Tauchbetrieb bestimmt. Er besteht in seinem grundsätzlichen Aufbau aus einem Faserbündel 1 aus einer Vielzahl von Hohlfasermembranen 2, die mit einem offenen Ende in ein Kopfstück 3 eingegossen sind und im Tauchbetrieb von einer zu filtrierenden Flüssigkeit umgeben werden, einem an das Kopfstück 3 anschließenden Permeatsammelraum 4 mit mindestens einem Permeatauslass 5 für das aus dem Inneren der Hohlfasermembranen 2 abfließende Permeat und einer Gaszuführung 6, die ein durch das Kopfstück 3 geführtes Rohr 7 aufweist. Das Rohr 7 endet im Inneren des Faserbündels 1 und weist einen Gasauslass 8 für ein gasförmiges Medium auf, welches nach dem Übergang aus dem Rohr 7 in die zu filtrierende Flüssigkeit im Wesentlichen zwischen den Hohlfasermembranen 2 des Faserbündels 1 als Blasen aufsteigt. Als gasförmiges Medium wird üblicherweise Luft verwendet.

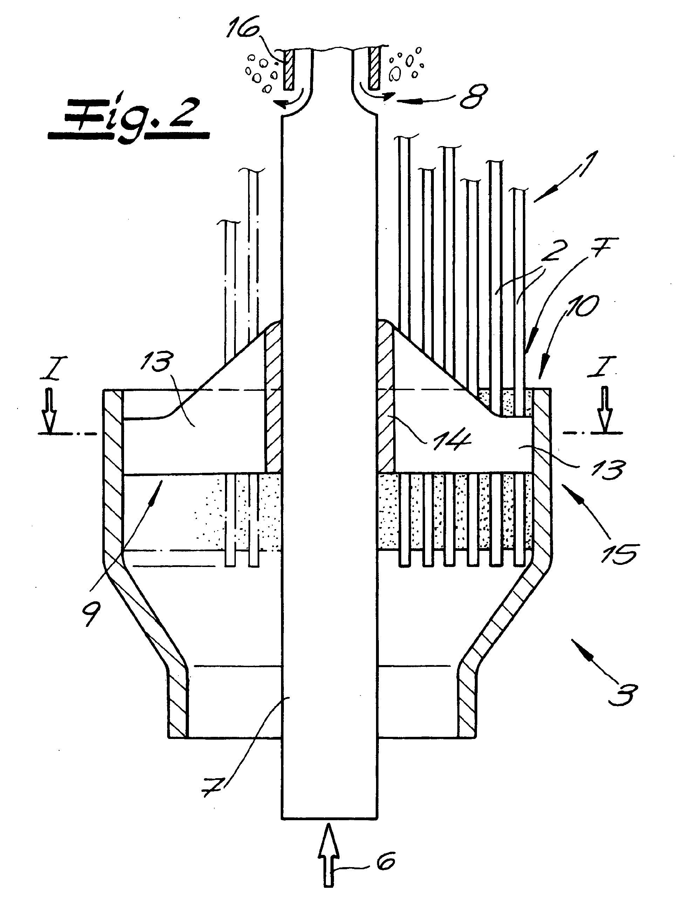

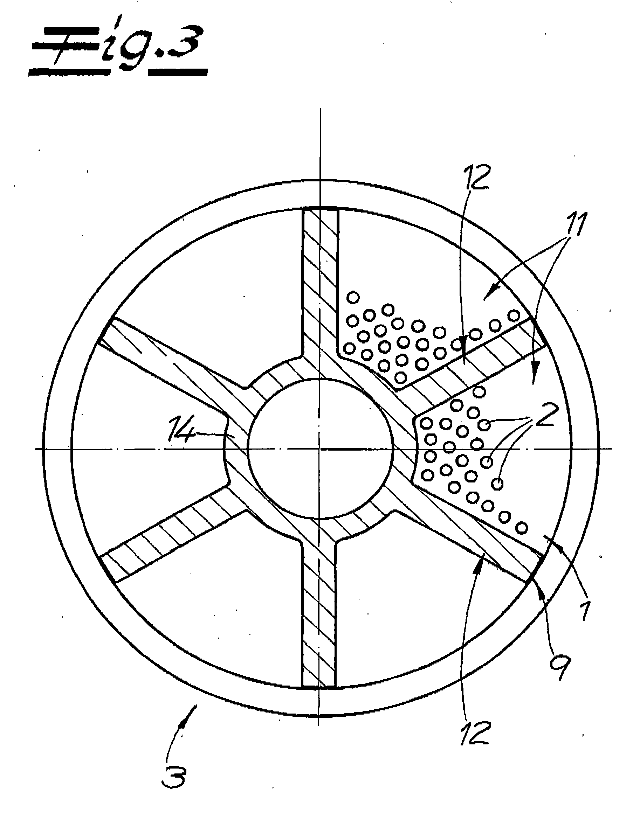

Insbesondere den Fig. 2 und 3 entnimmt man, dass das Kopfstück 3 einen das Rohr 7 umgebenden sternförmigen Einsatz 9 aufweist, der eine mit Hohlfasermembranen 2 belegte Stirnfläche 10 des Kopfstückes 3 in Sektionen 11 unterteilt und Freiräume 12 zwischen den Sektionen 11 bildet. Die Freiräume 12 zwischen den Sektionen erstrecken sich von dem Rohr 7 bis zum äußeren Umfang des Kopfstückes 3 und fördern einen Zufluss der zu filtrierenden Flüssigkeit in einen an das Kopfstück 3 angrenzenden Fußbereich F des Faserbündels 1. Fußbereich F meint einen an das Kopfstück 3 angrenzenden Abschnitt des Faserbündels 1, in dem die Fasern aufgrund ihrer endseitigen Einspannung nur geringe Relativbewegungen zueinander ausführen können und in dem üblicherweise eine Verschmutzung oder Verschlammung einsetzt. Der als Fußbereich F bezeichnete Faserabschnitt kann sich über etwa 200 mm erstrecken.

Das Kopfstück 3 ist als zylindrische Hülse ausgebildet und bildet im Ausführungsbeispiel ein separates Teil, welches auf den Permeatsammelraum 4 aufgesteckt ist. Das Kopfstück 3 könnte jedoch auch an den Permeatsammelraum 4 angeformt sein. Das Rohr 7 der Gaszuführung 6 ist in der Zylinderachse der Hülse angeordnet und ist von den Hohlfasermembranen 2 des Faserbündels 1 umgeben. Der sternförmige Einsatz 9 des Kopfstückes 3 weist radiale Stege 13 auf, die sich von einer das Rohr 7 umgebenden Nabe 14 bis zum Umfang des Kopfstückes 3 erstrecken. Oberseitig sind die Stege 13 gerundet oder mit Abschrägungen versehen. Ferner entnimmt man der Darstellung in Fig. 2, dass der Einsatz 9 eine von innen nach außen abnehmende Höhe aufweist, wobei der an das Rohr angrenzende Kern des Einsatzes 9 den Mantel des Kopfstückes 3 an der Stirnseite überragt und wobei das mantelseitige Anschlussende des Einsatzes in dem von dem Mantel des Kopfstückes 3 umschlossenen Raum versenkt angeordnet ist, so dass der Mantel des Kopfstückes 3 eine oberseitig vorstehende Einfassung 15 bildet. Die Einfassung 15 weist eine sich nach oben konisch erweiternde Innenfläche auf. Die beschriebene Gestaltung des Kopfstückes 3 sowie des Einsatzes 9 erleichtert das Einführen des Faserbündels 1 in das Kopfstück 3 im Zuge der Modulherstellung.

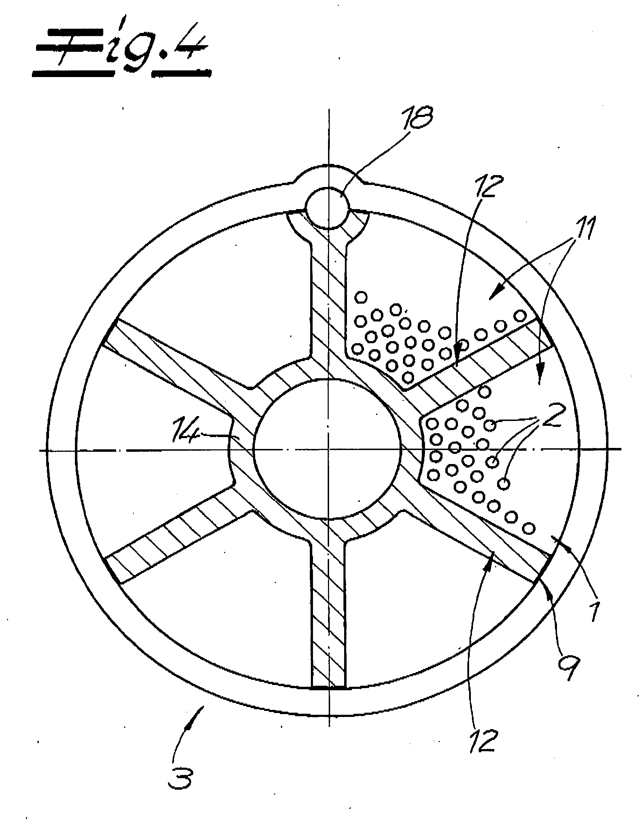

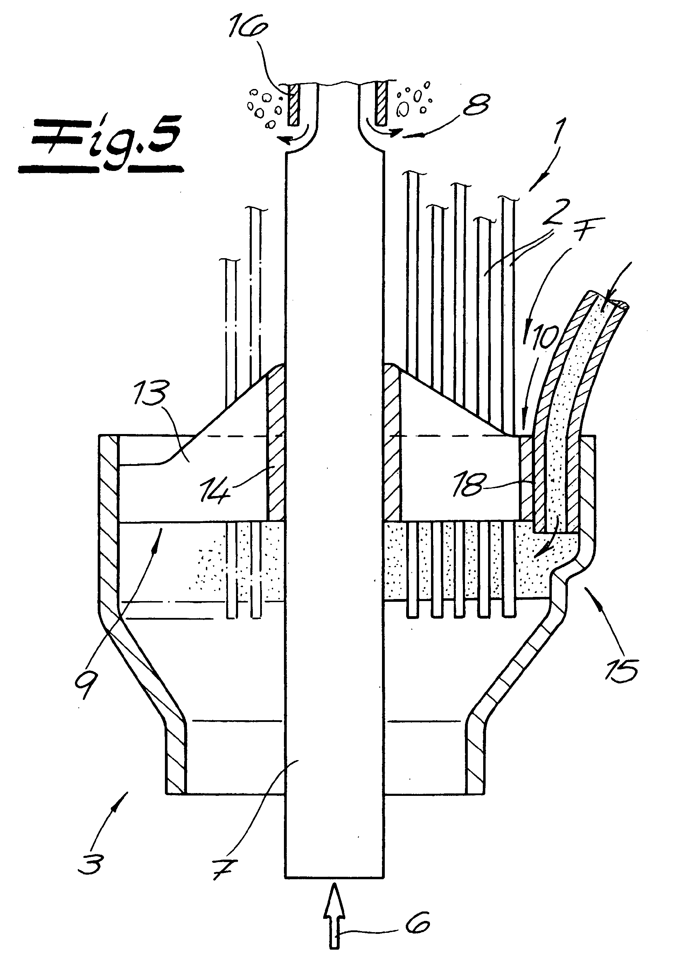

Der sternförmige Einsatz 9 wird mit den Hohlfasermembranen 2 in das Kopf-, stück 3 eingegossen und ist danach ganz oder teilweise von Gießmaterial umgeben. Bei der in Fig. 4 dargestellten Ausführung enthält der sternförmige Einsatz 9 eine Öffnung 18 für die Zuführung von Gießmaterial, welches sich unterhalb des Einsatzes 9 verteilt und die Hohlfasermembranen 2 dicht umschließt. Der Gießvorgang ist in Fig. 5 dargestellt. Der sternförmige Einsatz 9 ist als Kunststoffformteil ausgebildet und besteht aus einem Kunststoff, der eine gute Anhaftaffinität zu dem Gießmaterial aufweist. Der sternförmige Einsatz 9 und das zum Eingießen des Hohlfasermembran 2 verwendete Gießmaterial können auch aus demselben Material bestehen.

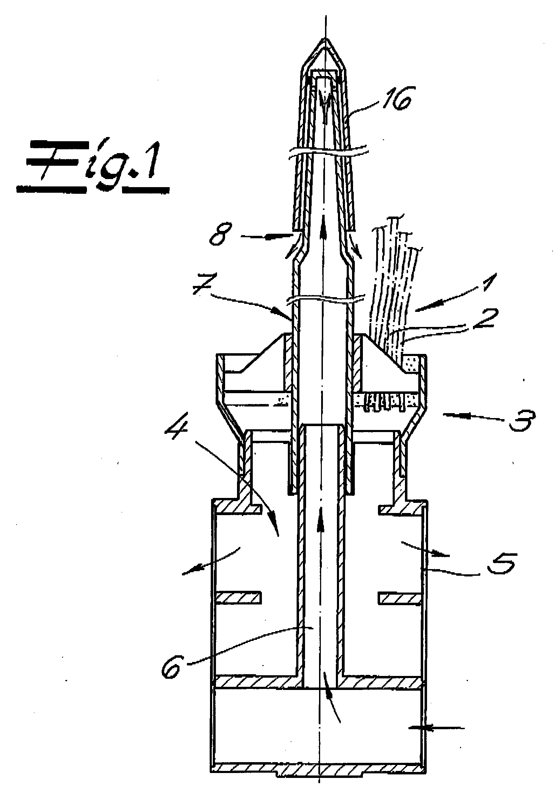

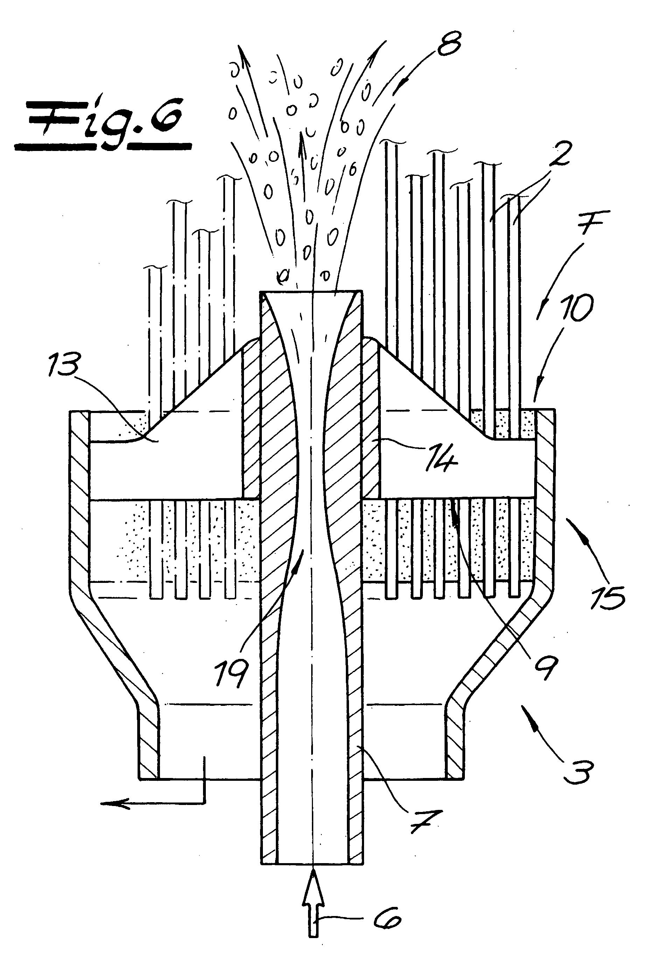

Der Gasauslass 8 des Rohres 7 ist mit geringem Abstand vom Kopfstück 3 im Fußbereich des Faserbündels 1 angeordnet und so in einer nicht erfindungsgemäßen Ausführung ausgebildet, dass das gasförmige Medium mit einer im Wesentlichen gleichmäßigen Verteilung am Umfang des Rohres 7 austritt. Gemäß der Fig. 1 ist auf dem Rohr 7 ist eine oberseitig geschlossene Kappe 16 angeordnet, wobei das Rohr 7 und die Kappe 16 einen am unteren Ende der Kappe offenen Strömungsraum für das gasförmige Medium bilden. Im erfindungsgemäßen Ausführungsbeispiel der Fig. 6 weist das Rohr 7 eine als Düse, z.B. als Venturidüse 19, ausgebildete axiale Ausgangsöffnung auf. Das mit einer großen Strömungsgeschwindigkeit austretende gasförmige Medium hat einen Strahlpumpeneffekt auf die umgebende Flüssigkeit.

## Patentansprüche

1. Membranmodul, der für einen Tauchbetrieb in ein Becken mit einer zu filtrierenden Flüssigkeit absenkbar ist, mit
einem Kopfstück (3),
einem Faserbündel (1) aus einer Vielzahl von Hohlfasermembranen (2), die mit einem offenen Ende in das Kopfstück (3) eingegossen sind und von der zu filtrierenden Flüssigkeit umgeben werden, wobei die Hohlfasermembranen (2) in der Flüssigkeit im Wesentlichen vertikal ausgerichtet sind,
einem an das Kopfstück (3) anschließenden Permeatsammelraum (4) mit mindestens einem Permeatauslass (5) für das aus dem Inneren der Hohlfasermembranen (2) abfließende Permeat und
einer Gaszuführung (6), die ein durch das Kopfstück (3) geführtes Rohr (7) aufweist,
wobei das Rohr (7) im Inneren des Faserbündels (1) in einem Gasauslass (8) für ein gasförmiges Medium endet, welches nach dem Übergang aus dem Rohr (7) in die zu filtrierende Flüssigkeit im Wesentlichen zwischen den Hohlfasermembranen (2) des Faserbündels (1) als Blasen aufsteigt, **dadurch gekennzeichnet, dass** das Faserbündel (1) in Sektionen (11) unterteilt ist, die jeweils eine Gruppe von Hohlfasermembranen (2) umfassen, dass zwischen den Sektionen (11) Freiräume (12) verbleiben, die sich sternförmig von dem Rohr (7) bis zum äußeren Umfang des Kopfstückes (3) erstrecken und einen durch die aufsteigenden Blasen angeregten Zufluss der zu filtrierenden Flüssigkeit in einen an das Kopfstück (3) angrenzenden Fußbereich des Faserbündels (1) fördern, dass der Gasauslass (8) des Rohres (7) im Fußbereich des Faserbündels (1) angeordnet ist und dass das Rohr (7) eine als Düse (19) ausgebildete axiale Auslassöffnung aufweist.

2. Membranmodul nach Anspruch 1, **dadurch gekennzeichnet, dass** das Kopfstück (3) als zylindrische Hülse ausgebildet ist und das Rohr (7) der Gaszuführung (6) in der Zylinderachse angeordnet ist.

3. Membranmodul nach Anspruch 1 oder 2, **dadurch gekennzeichnet, dass** das Kopfstück (3) einen das Rohr (7) umgebenden sternförmigen Einsatz (9) aufweist, der eine mit Hohlfasermembranen (2) belegte Stirnfläche (10) des Kopfstückes (3) in die Sektionen (11) unterteilt und die Freiräume (12) zwischen den Sektionen (11) bildet.

4. Membranmodul nach Anspruch 3, **dadurch gekennzeichnet, dass** der sternförmige Einsatz (9) des Kopfstückes (3) radiale oder spiralförmig gekrümmte Stege (13) aufweist, die sich von dem Rohr (7) oder von einer das Rohr (7) umgebenden Nabe (14) bis zum Umfang des Kopfstückes (3) erstrecken.

5. Membranmodul nach Anspruch 4, **dadurch gekennzeichnet, dass** die Stege (13) oberseitig gerundet oder mit Abschrägungen versehen sind.

6. Membranmodul nach einem der Ansprüche 3 bis 5, **dadurch gekennzeichnet, dass** der Einsatz (9) eine von innen nach außen abnehmende Höhe aufweist, wobei der an das Rohr (7) angrenzende Kern des Einsatzes (9) den Mantel des Kopfstückes (3) an der Stirnseite überragt und wobei das mantelseitige Anschlussende des Einsatzes (9) in dem von dem Mantel des Kopfstückes (3) umschlossenen Raum versenkt angeordnet ist, so dass der Mantel des Kopfstückes (3) eine oberseitig vorstehende Einfassung (15) bildet.

7. Membranmodul nach Anspruch 6, **dadurch gekennzeichnet, dass** die Einfassung (15) eine sich nach oben konisch erweiternde Innenfläche aufweist.

8. Membranmodul nach einem der Ansprüche 3 bis 7, **dadurch gekennzeichnet, dass** der sternförmige Einsatz (9) eine Öffnung (18) für die Zuführung von Gießmaterial enthält, welches sich unterhalb des Einsatzes (9) verteilt und die Hohlfasermembranen (2) dicht umschließt.

9. Membranmodul nach einem der Ansprüche 3 bis 8, **dadurch gekennzeichnet, dass** der sternförmige Einsatz (9) und das zum Eingießen der Hohlfasermembranen (2) verwendete Gießmaterial aus demselben Material bestehen.

10. Membranmodul nach Anspruch 1, **dadurch gekennzeichnet, dass** die Auslassöffnung des Rohres (7) als Venturidüse (19) ausgebildet ist.

## Claims

1. A membrane module provided for an immersed operation in a basin with a liquid to be filtered, comprising:
a headpiece (3);
a fibre bundle (1) of a multiplicity of hollow fibre membranes (2), which are cast with open ends into the headpiece and are surrounded by a liquid to be filtered, wherein the hollow fibre membranes are largely vertically oriented in the liquid;
a permeate collection chamber (4) connecting to the headpiece (3) with at least one permeate outlet (5) for the permeate draining from the interior of the hollow fibre membranes (2);
a gas supply (6) comprising a pipe (7) which is guided through the headpiece (3),
wherein the pipe (7) ends in the interior of the fibre bundle (1) in a gas outlet (8) for a gaseous medium which after the transition from the pipe to the liquid to be filtered largely rises between the hollow fibre membranes (2) of the fibre bundle (1) as bubbles, **characterized in that** the fibre bundle (1) is divided into sections (11) each comprising a group of hollow fibre membranes (2)
wherein free spaces (12) remain between the sections (11) extending from the pipe (7) to the outer circumference of the headpiece (3) in a star-shaped structure to promote an inflow of the liquid from the surroundings of the fibre bundle into a foot area of the fibre bundle (1) adjoining the headpiece (3) due to flow movement through the rising bubbles, and
wherein the gas outlet (8) of the pipe (7) is arranged in the foot area of the fibre bundle and is designed as a nozzle (19) comprising an axial outlet opening.

2. The membrane module according to claim 1, **characterized in that** the headpiece (3) is designed as a cylindrical sleeve comprising a central cylinder axis and the pipe (7) of the gas supply (6) is arranged in the cylinder axis.

3. The membrane module according to claims 1 or 2, **characterized in that** the headpiece (3) has an insert (9) with radial webs (13) surrounding the pipe (7), wherein, with respect to an upper face (10) of the headpiece (3), the webs (13) form the free spaces (12) between the sections (11).

4. The membrane module according to claim 3 **characterised in that** the radial or helical webs (13) extend from the pipe (7) or from a hub (14) surrounding the pipe (7) to the circumference of the headpiece (3).

5. The membrane module according to claim 4 **characterised in that** the webs (13) are rounded or bevelled at the top.

6. The membrane module according to any one of the claims 3 to 5 **characterised in that** the insert (9) has a height decreasing from the inside to the outside wherein the core of the insert (9) adjoining the pipe (7) protrudes the face (10) of the jacket of the headpiece (3), which forms the entire circumference part of the headpiece (13) and wherein the jacket-side connection end of the insert (9) is arranged recessed in the space enclosed by the jacket of the headpiece (3), so that the jacket of the headpiece (3) forms an edge (15) protruding from said jacket-side correction at the top the jacket.

7. The membrane module according to claim 6 **characterized in that** the edge (15) has an interior surface conically expanding upwards.

8. The membrane module according to any one of the claims 3 to 7 **characterized in that** the star-shaped insert (9) includes an opening (18) for the feeding of casting material which spreads below the insert (9) and tightly encloses the hollow fibre membranes (2).

9. The membrane module according to any one of the claims 3 to 8 **characterized in that** the star-shaped insert (9) and the casting material used for casting-in the hollow fibre membranes (2) consist of the same material.

10. The membrane module according to claim 1 **characterised in that** the outlet opening of the pipe (7) is designed as a venturi nozzle (19).

## Revendications

1. Module membranaire qui peut être descendu pour être utilisé plongeant dans un bassin avec un liquide à filtrer, comportant
une pièce sommitale (3),
un faisceau de fibres (1) constitué d'une multitude de membranes à fibres creuses (2) qui sont coulées par une extrémité ouverte dans la pièce sommitale (3) et sont entourées par le liquide à filtrer, les membranes à fibres creuses (2) étant orientées sensiblement verticalement dans le liquide,
une chambre collectrice de perméat (4) se raccordant la pièce sommitale (3) et comportant au moins une sortie de perméat (5) pour le perméat s'écoulant depuis l'intérieur des membranes à fibres creuses (2) et
une arrivée de gaz (6) qui présente un tuyau (7) guidé à travers la pièce sommitale (3),
dans lequel le tuyau (7) se termine à l'intérieur du faisceau de fibres (1) en une sortie de gaz (8) pour un fluide gazeux qui, après être passée du tuyau (7) dans le du liquide à filtrer, monte sensiblement sous forme de bulles entre les membranes à fibres creuses (2) du faisceau de fibres (1),
**caractérisé en ce que** le faisceau de fibres (1) est divisé en sections (11) qui comprennent respectivement un groupe de membranes à fibres creuses (2), que, entre les sections (11), il reste des espaces libres (12) qui s'étendent en forme d'étoile depuis le tuyau (7) jusqu'à la circonférence extérieure de la pièce sommitale (3) et charrient un afflux impulsé par les bulles montantes du liquide à filtrer vers une partie de base adjacente à la pièce sommitale (3) du faisceau de fibres (1), que la sortie de gaz (8) du tuyau (7) est disposée dans la partie de base du faisceau de fibres (1) et que le tuyau (7) présente un orifice de sortie axial se présentant sous forme d'une buse (19).

2. Module membranaire selon la revendication 1, **caractérisé en ce que** la pièce sommitale (3) se présente sous forme d'un manchon cylindrique et que le tuyau (7) de l'arrivée de gaz (6) est disposé dans l'axe du cylindre.

3. Module membranaire selon la revendication 1 ou 2, **caractérisé en ce que** la pièce sommitale (3) présente un insert (9) en forme d'étoile entourant le tuyau (7) et qui divise une surface frontale (10) recouverte de membranes à fibres creuses (2) de la pièce sommitale (3) en sections (11) et constitue les espaces libres (12) entre les sections (11).

4. Module membranaire selon la revendication 3, **caractérisé en ce que** l'insert (9) en forme d'étoile de la pièce sommitale (3) présente des traverses radiales ou recourbées en spirale (13) qui s'étendent depuis le tuyau (7) ou depuis un moyeu (14) entourant le tuyau (7) jusqu'à la circonférence de la pièce sommitale (3).

5. Module membranaire selon la revendication 4, **caractérisé en ce que** les traverses (13) sont arrondies sur le dessus ou pourvues de biseaux.

6. Module membranaire selon une des revendications 3 à 5, **caractérisé en ce que** l'insert (9) a une hauteur diminuant de l'intérieur vers l'extérieur, le noyau adjacent au tuyau (7) de l'insert (9) dépassant de l'enveloppe de la pièce sommitale (3) sur la face frontale et l'extrémité de raccordement côté enveloppe de l'insert (9) étant disposée descendue dans l'espace circonscrit par l'enveloppe de la pièce sommitale (3), de sorte que l'enveloppe de la pièce sommitale (3) forme une bordure (15) proéminente en haut.

7. Module membranaire selon la revendication 6, **caractérisé en ce que** la bordure (15) présente une surface intérieure s'élargissant en cône vers le haut.

8. Module membranaire selon une des revendications 3 à 7, **caractérisé en ce que** l'insert en forme d'étoile (9) comprend un orifice (18) pour l'apport de matériau de coulée qui se répartit en-dessous de l'insert (9) et entoure de près les membranes à fibres creuses (2).

9. Module membranaire selon une des revendications 3 à 8, **caractérisé en ce que** l'insert en forme d'étoile (9) et le matériau de coulée utilisé pour couler les membranes à fibres creuses (2) sont faits du même matériau.

10. Module membranaire selon la revendication 1, **caractérisé en ce que** l'orifice de sortie du tuyau (7) se présente sous forme d'une buse Venturi (19).
